# EUROPÄISCHE PATENTANMELDUNG

(11) **EP 0 792 609 A1**
(43) Veröffentlichungstag der Anmeldung: **03.09.1997**
(21) Anmeldenummer: 96250050.0
(22) Anmeldetag: 27.02.1996
(51) Int. Cl.: A47J 37/10

(54) **Abdeckhaube für Brat- und Kochgerätschaften**

(71) Anmelder: Potreck, Karin, 51379 Leverkusen (DE)
(72) Erfinder: Schwarz, Dieter, 23 816 Bebensee (DE)
(74) Vertreter: Patentanwälte Wenzel & Kalkoff

(57) **Zusammenfassung**

Abdeckhaube für Brat- und Kochgerätschaften, umfassend ein Haubenteil (1), einen ringförmigen Kragen (2), der einen Kondensatauffangring bildet und in der Ringbreite quer über den Oberrand der Brat-/Kochgerätschaft (4) setzbar ist, sowie ein Haltemittel (3), wobei das Haubenteil (1) nur indirekt über das Haltemittel (3) mit dem Kragen (2) verbunden und derart gehalten ist, daß an der Haubenteil-Innenfläche (13) anfallendes Kondensat auf den Kragen (2) gelangt. Das Haltemittel (3) ist außen an dem Kragen (2) angeordnet, und das Haubenteil (1) ist mit mindestens einem in vertikaler Richtung räumlich über dem Kragen (2) angeordneten Halteteil (31) des Haltemittels 83) verbunden.

## Beschreibung

Die Erfindung betrifft eine Abdeckhaube für Brat- und Kochgerätschaften, umfassend ein Haubenteil, einen ringförmigen Kragen, der einen Kondensatauffangring bildet und in der Ringbreite quer über den Rand der Brat-/Kochgerätschaft setzbar ist, sowie ein Haltemittel, wobei das Haubenteil nur indirekt über das Haltemittel mit dem Kragen verbunden und derart gehalten ist, daß an der Haubenteil-Innenfläche anfallendes Kondensat auf den Kragen gelangt.

Eine gattungsgemäße Abdeckhaube ist aus EP 0 192 163 bekannt. Dort sind an der Innenwand eines torusförmigen Kragens Haken angebracht, in die das Haubenteil von oben eingesetzt ist. Ein besonders hochstehender äußerer Kragenrand führt dazu, daß der Kragen im ganzen relativ unförmig, gewichtsmäßig relativ schwer sowie mit verhältnismäßig großem Außendurchmesser vorzusehen ist. Dies bedingt entsprechend hohe Material- und Herstellungskosten. Der relativ massive Ring erschwert auch die Handhabung beim Reinigen. Fettreste sind im Bereich der Haken an der Innenwand des Toruskragens nicht ohne weiteres entfernbar. - Ähnliche Nachteile sind auch mit einer Ablufthaube für Bratgeräte gemäß G 94 10 417 verbunden. Ein Haubenteil faßt in engem Sitz in einen Kragen mit hochstehendem umlaufendem Rand ein. Es ist nicht möglich, bei zusammengefügter Haube Kondensat aus einer Kragen-Auffangrinne abzugießen. An der Kragenunterseite sind stufenförmige Abstandshalter ausgeformt, um die Haube auf Bratgeräte in Standardgrößen aufsetzen zu können und eine Luftzufuhr zwischen der Oberkante des Bratgeräts und der Kragenunterseite zu erreichen. Um Fettspritzer zu vermeiden, ist der untere Kragenrand vertikal nach unten abgebogen, wobei er mit dem oberen Innenrand des Bratgerätes überlappt. Der Kragen dieser bekannten Haube ist nicht nur relativ unförmig sondern auch besonders an das in dem Kragen aufsitzende Haubenteil anzupassen.

Bei einer anderen bekannten Abdeckhaube (G 94 18 325.2) sitzt ein Haubenteil formschlüssig dichtend im Bereich des äußeren Randes eines Kragens auf. Das Abgießen von Kondensat bei zusammengefügter Haube ist praktisch nicht möglich. Zwar kann der Kragen relativ materialsparend ausgeführt sein. Um jedoch in der Praxis eine unerwünschte Verunreinigungen zwischen Haubenteil und Ringkragen vermeidende Verbindung herzustellen, muß ein aufwendiges und nur mit Mühe zu reinigendes Spannmittel wie ein Spannring vorgesehen werden. Zudem ist dadurch die Handhabung erschwert. Der Ringkragen wird direkt auf den oberen Rand eines Bratgeräts aufgesetzt. Es sind keine gezielten Maßnahmen zur Luftzuführung in den Bratraum vorgesehen.

Der Erfindung liegt die Aufgabe zugrunde, die gattungsgemäße Abdeckhaube hinsichtlich einfacher Handhabung, leichter Reinigung, kostengünstiger und gewichtsmäßig leichter Bauweise sowie der Funktion, d.h. insbesondere hinsichtlich optimaler Luftzuführung und -zirkulation, des Abgießens von Kondensat und der Vermeidung von Fettspritzern, sowie der universellen Verwendbarkeit für eine Vielzahl von Bratgeräten zu verbessern.

Die Aufgabe wird in Verbindung mit den Merkmalen der eingangs genannten Abdeckhaube dadurch gelöst, daß das Haltemittel außen an dem Kragen angeordnet ist und das Haubenteil mit mindestens einem in vertikaler Richtung räumlich über dem Gesamtkragen angeordneten Halteteil des Haltemittels verbunden ist. Das Haltemittel ist außerhalb des Innenbereichs des Kragens außen an diesem angeordnet. Zwischen dem Haubenteil und dem Kragen ist ein umlaufender Spalt zur Luftzufuhr in den Bratraum sowie bei Bedarf zum Abgießen von Kondensat gebildet. Mittels der erfindungsgemäßen Anordnung und Verbindung kann das Haubenteil ohne Handeingriff in den Kragen bequem an letzteren angesetzt bzw. von ihm getrennt werden. Die Innenfläche des Kondensat oder Fett aufnehmenden Kragens ist besonders einfach zu reinigen, wobei Hinterschneidungen, besondere Apformungen oder ein besonders hochstehender Rand herkömmlicher Art entfallen. Auch wenn das Halte-/Verbindungsmittel aus Metall besteht, ist aufgrund der Anordnung eine übermäßige Erwärmung unterbunden, so daß auch bei noch nicht fortgeschrittener Abkühlung die Handhabung gefahrloser als bei Hauben mit herkömmlich vorgesehener Verbindung ist. Zur Verwendung mit dem erfindungsgemäßen Haltemittel eignen sich ohne weiteres an sich bekannte Glashauben, und zwar vorzugsweise mit einem umlaufenden Radialrand an der Haubenteilunterseite.

Aufgrund der erfindungsgemäßen Außenanordnung des Halte-/Verbindungsmittels an dem Kragen läßt sich dieser besonders einfach und materialsparend mit gewünschtem einfachem Profilquerschnitt und insbesondere auch als Austauschteil gestalten. Sehr vorteilhaft ist es, daß der Kragen als Tropfen auffangende Wanne vorzugsweise mit einer umlaufenden, zum Haubeninneren hin gelegenen Auffangrinne ausgebildet werden kann.

Eine sehr zweckmäßige erfindungsgemäße Ausgestaltung besteht darin, daß die Tropfwanne mit einem Abgießrand und/oder mindestens einer Abgießnase oder -öffnung an ihrer Außenseite ausgestattet ist. Da die Halteverbindung zwischen Haubenteil und Kragen ausschließlich außerhalb und oberhalb des Kragens vorgesehen ist, reicht im Unterschied zu der gattungsbildenden Haube gemäß EP 0 192 163 eine relativ geringe Kipplage aus, um Kondensat über den Abgießrand oder eine Nase abzugießen, wodurch die Handhabung erleichtert und Verletzungsgefahr durch Berührung von heißen Teilen vermindert ist.

Obgleich das Haltemittel zur erfindungsgemäßen indirekten Abstandsverbindung zwischen Haubenteil und Kragen einstückig mit dem Kragen z.B. durch Löt-, Klebeverbindung od.dgl. oder mittels einer Anformung verbunden sein kann, besteht eine erfindungsgemäß besonders bevorzugte zweckmäßige Gestaltung darin, daß das Haltemittel lösbar an den Kragen ansetzbar ist, wobei es den Ringkragen mittels eines Klammer- oder Aufnahmeteils wenigstens teilweise umgreift. Vorzugsweise sind drei mit einem federnd nachgiebigen Schnappprofil vorgesehene Klammern oder Klemmspangen im Umfangswinkelabstand von 120° in Klemmverbindung um wenigstens einen Teil der Außenfläche des Ringkragens gesetzt. Dabei ist es weiter sehr vorteilhaft, daß außenseitig an die Klammern nach oben sich erstreckende S-förmige Klemmelemente angeformt sind, wobei zweckmäßig die Dimension des unteren S-Abschnitts den vertikalen Höhenabstand des Haubenteils zu dem Kragen bestimmt und der obere S-Abschnitt eine Klemmnut für ein an dem Haubenteil radial hervorstehendes Federelement bildet, das zweckmäßig in Form des unteren Flach- oder Aufstandrandes eines Haubenteils genutzt wird. Die Klammern können zur Grundreinigung schnell und bequem von dem Kragen abgenommen werden, während sie im übrigen ohne weiteres an den Kragen angesetzt bleiben können, ohne daß dessen Innenreinigung beeinträchtigt ist.

Eine besonders vorteilhafte Ausgestaltung der Erfindung besteht auch darin, daß eine Klammer des Halte-/Verbindungsmittels den Ringkragen mit einem Stegabschnitt untergreift, der im Haubeninneren in einen nach oben abgebogenen Federrand zur Klemmaufnahme des Ringkragens übergeht. Sehr vorteilhaft ist es, drei Klammerstege vorzusehen, mit denen der Ringkragen nur indirekt auf dem Bratgerätrand aufsitzt. Dadurch ist ein übermäßiger Wärmeübergang von dem Bratgerät auf den Ringkragen vermieden, und es ist ein sicherer kippfreier Drei-Punkte-Aufsatz hergestellt. Der Klammersteg kann dennoch relativ dünnwandig sein, wobei bei flächig an der Kragenunterseite anliegendem Klammersteg zwischen Ringkragen und Bratgerät-Oberrand praktisch kein den Bratvorgang beeinflussender Luftdurchgang erfolgt. - Eine andere vorteilhafte erfindungsgemäße Gestaltung kann aber auch darin bestehen, den Klammersteg so zu formen oder mit einer Wandstärke zu versehen oder den Kragen in der Klemmaufnahme hochzusetzen, daß gezielt zwischen Ringkragen und Bratgerät Luft eingezogen werden kann, um im Zusammenspiel mit dem erfindungsgemäß vorgesehenen Lufteinzug zwischen Haubenteil und Ringkragen zum Braten besonders günstige Zirkulationseffekte im Haubeninnenraum vorzusehen. Bei dieser erfindungsgemäßen Ausführungsform ist es sogar möglich, das Haubenteil geschlossen ohne obere Luftzirkulations-Öffnung vorzusehen.

Es wurde gefunden, daß bei der Spaltbildung zwischen Haubenteil und Ringkragen aufgrund der erfindungsgemäßen Halteverbindung und -anordnung der Austritt von Fettspritzern im Spaltbereich auch bei verhältnismäßig großer vertikaler Spalthöhe und bei Nicht-Eingriff des untersten Haubenrandes in das Krageninnere vermieden ist. Besonders günstige Verhältnisse werden mit einem Vertikalabstand zwischen dem untersten Haubenteilrand und dem obersten Kragenrand von 0 bis 5 mm erreicht, wobei insbesondere der untere Öffnungsdurchmesser des Haubenteils in der Größenordnung von 23 bis 28 cm liegt. Ein besonders ausgeprägter Lufteinzug sowie zuverlässige Vermeidung von Fettspritzeraustritt kann in erfindungsgemäßer Ausgestaltung vorteilhaft auch dadurch erzielt werden, daß der Rand-Radialabstand zwischen den äußeren Umlaufrändern von Haubenteil und Ringkragen 0 bis 4 mm beträgt. Dabei kann die Kragen-Ringbreite im Verhältnis zu dem kleinsten Durchmesser des Bratgeräts zweckmäßig relativ gering sein, vorteilhaft in der Größenordnung von 25 bis 30 mm, wodurch einerseits der Bratraum in dem Bratgerät mittels eines üblicherweise durchsichtigen Haubenteils vollständig einsehbar ist und andererseits an der inneren Unterkante des Haubenteils abtropfendes Kondensat zuverlässig auf den zweckmäßig zum Haubeninneren nach unten geneigten Ringkragen gelangt.

Noch andere zweckmäßige und vorteilhafte Ausgestaltungen der Erfindung gehen aus Unteransprüchen hervor.

Besonders zweckmäßige und vorteilhafte Ausbildungsformen oder -möglichkeiten der Erfindung werden anhand der folgenden Beschreibung der in der schematischen Zeichnung dargestellten Ausführungsbeispiele näher beschrieben. Es zeigen
- Fig. 1: im Teil-Vertikalschnitt in zwei Ebenen I-I-II gemäß Fig. 2 eine erfindungsgemäße Abdeckhaube und
- Fig. 2: die Draufsicht auf einen vom Haubenteil abgenommenen Ringkragen der Abdeckhaube gemäß Fig. 1.

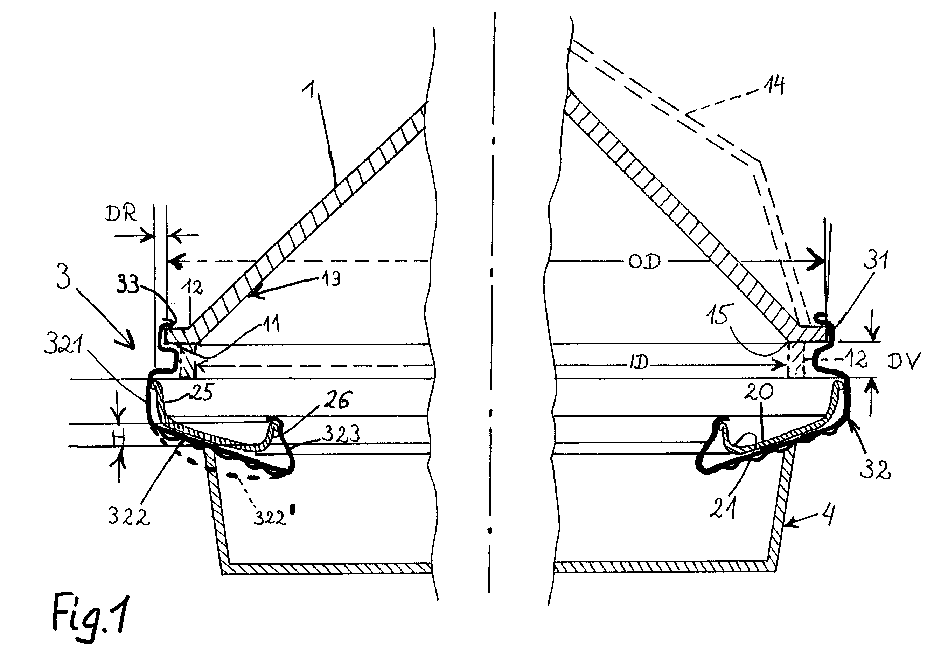

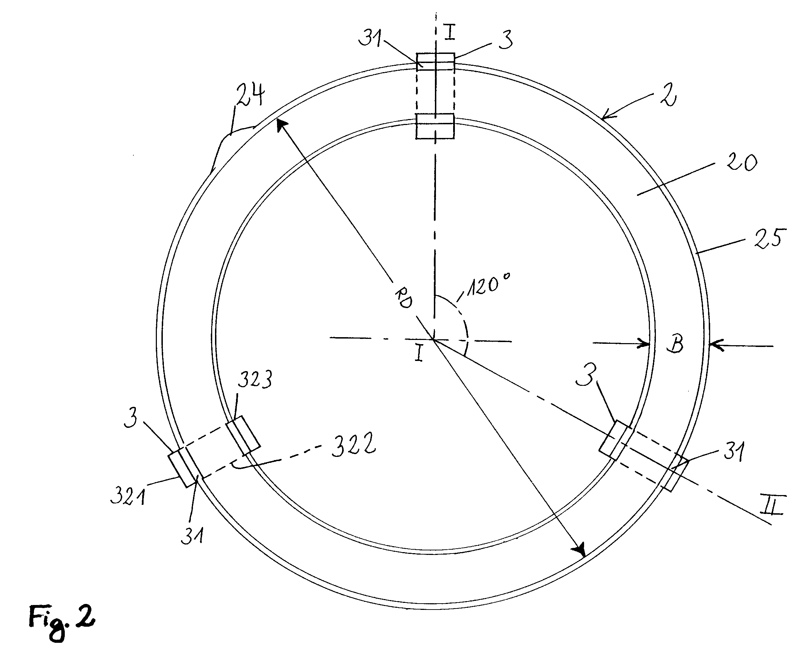

Wie aus Fig. 1 und 2 ersichtlich, umfaßt das Ausführungsbeispiel einer erfindungsgemäßen Abdeckhaube ein Haubenteil 1, einen Kragen 2 in Form eines geschlossenen Kreisrings sowie als Haltemittel drei spangenartige Klammern 3, die das Haubenteil 1 außerhalb des Kragens 2 halten und über die es indirekt mit dem Kragen 2 verbunden ist. Das Haubenteil 1 besteht üblicherweise aus durchsichtigem Material wie feuer-/wärmebeständigem Glas und hat zweckmäßig die Form nach Art eines Kegelstumpfes mit - im Ausführungsbeispiel - wenigstens einer Öffnung im Bereich der oberen Kegelstumpfwand. Der Neigungswinkel des Haubenteils 1 beträgt z.B. 45°. Das Haubenteil kann aber auch andere kuppelförmige Formen aufweisen.

Die Abdeckhaube ist auf ein Bratgerät 4 wie eine Bratpfanne aufgesetzt und mittels eines am Haubenteil 1 befestigten Griffes 14 einteilig handhabbar.

Die Klammern 3 sitzen in Klemmverbindung an dem Ringkragen 2, und zwar - wie aus Fig. 2 ersichtlich - im Umfangswinkelabstand von 120°. Sie bestehen aus elastisch auffederbarem, relativ hartem, mit Kraft beaufschlagbarem Material aus Metall, wärmefestem Kunststoff od. dgl.. Der obere Klammerteil ist S-förmig und bildet ein Halte-Klemmelement 31 zur Verbindung mit dem Haubenteil 1. Der untere Teil der einstückigen Klammer 3 ist durch eine Klemmaufnahme 32 gebildet. Deren äußere Grundform ist im Profilquerschnitt trapezförmig. Das S-Klemmelement 31 geht am unteren S-Abschnitt in den an der Abdeckhaube außenliegenden Klammerschenkel 321 über, der seinerseits durch Abbiegung in den Boden- oder Stegabschnitt 322 übergeht. Dieser erstreckt sich im Profilquerschnitt geradlinig nach unten und innen in den Bereich unter das Haubenteil 1. An den Stegabschnitt 322 ist ein nach oben gekrümmter auffederbarer Schenkelabschnitt 323 angeformt. Die Klammer 3 ist nach oben offen, so daß sie von unten bequem an den Ringkragen 2 ansetzbar ist.

Der obere Abschnitt des S-Elements 31 bildet den Halte- und Klemmsitz für einen umlaufenden horizontalen Haubenteil-Flachrand 11, der als Befestigungsrand dient. Er schließt das Haubenteil 1 nach unten hin ab. Er bildet ein radial sich erstreckendes Federelement, das in lösbarer Klemmverbindung in die oberen Nutabschnitte der drei S-Elemente 31 einfaßt. Oben an den S-Elementen 31 sind kurzstückige Handhabungsnasen 33 in Form eines gebördelten Randes ausgebildet, um die S-Elemente oder -Laschen gegen Federkraft bequem nach außen bewegen zu können.

Der Befestigungsrand 11, der auch unterbrochen vorgesehen sein kann, ist mit einem Vertikalabstand DV von ca. 5 mm zum oberen Kragenrand angeordnet. Der äußere Durchmesser OD des Randes 11 ist kleiner als der äußere Ringkragendurchmesser RD. Insbesondere in Verbindung mit dem genannten Vertikalabstand DV von ca. 5 mm beträgt der resultierende Rand-Radialabstand DR vorzugsweise ca. 3 mm.

Wrasen (Kondensat), die im Bereich der unteren Haubenteil-Innenfläche 13 anfallen, tropfen an der unteren Haubenteil-Innenkante 15 nach unten ab und gelangen in den Ringkragen 2. Der untere Abschnitt des S-Klemmelements 31 bestimmt den genannten Vertikalabstand DV, also das Maß, mit dem das Haubenteil 1 unter Vermeidung einer vertikalen Überlappung mit dem Ringkragen 2 räumlich über diesem angeordnet ist.

Gemäß einer Ausführungsform der Erfindung kann es aber auch vorteilhaft und zweckmäßig sein, das Haubenteil 1 nach unten mit einem umlaufenden kreiszylinderförmigen Rand 12 zu verlängern. Dieser ist in Fig. 1 gestrichelt dargestellt und bildet nicht nur einen über dem Auffangbereich des Kragens 2 verlaufenden Abtropfrand für Wrasen, sondern er dient im wesentlichen auch dazu, den Lufteinzug in die Haube hinsichtlich Menge und Strömungsgeschwindigkeit zu beeinflussen. Es sei darauf hingewiesen, daß der Zylinderrand 12 bei einem bevorzugten Vertikalabstand DV von 0 bis 5 mm nicht vorgesehen werden muß, um im offenen Spalt zwischen Haubenteil 1 und Ringkragen 2 Fettspritzer nach außen zu vermeiden. Im Ausführungsbeispiel mit dem gestrichelt dargestellten Zylinder-Öffnungsrand 12 beträgt dessen Vertikalabstand zum oberen Kragenrand Null. Auch insoweit ist es besonders vorteilhaft, daß der Zylinderrand 12 nicht oder nur kaum mit einem Außenrand 25 des Kragens 2 überlappt. Der Radialabstand des Zylinderrandes 12 zu der am Haubenumfang äußeren Innenkante des Kragens 2 liegt vorzugsweise in der Größenordnung von 5 bis 10 mm.

Wie aus Fig. 1 ersichtlich, weist der Ringkragen 2 mit äußerem Umfangsrand 25 und innerem Umfangsrand 26 einen U- oder trapezförmigen Profilquerschnitt auf, an den der Aufnahme-Klemmquerschnitt der Klemmaufnahme 32 angepaßt ist. Dabei kann der Rand 25 zur Lagerstabilisierung zweckmäßig unter den unteren S-Abschnitt des Klemmelements 31 greifen. Im Profilquerschnitt erstreckt sich der Kragenboden geradlinig schräg nach unten und ins Haubeninnere. Durch den inneren Rand 26, der sich nach oben etwa bis zur Höhe der unteren Kante des Randes 25 erstreckt, ist eine im Profilquerschnitt dreieckförmige Tropfwanne 20 mit innenliegender Rinne 21 ausgebildet. Dabei ist die effektive, in senkrechter Haubenausrichtung maximale Flüssigkeitshöhe gleich der Höhe des Randes 26. Diese effektive Tropfwannenhöhe H liegt vorteilhaft in der Größenordnung von 5 bis 10 mm. Dabei beträgt die maximale Höhe des gesamten Ringkragens mit dem Rand 25 ca. 15 bis 20 mm. Vorzugsweise liegt die horizontale Ringbreite B des Kragens 2 in der Größenordnung von 25 bis 30 mm. Besonders vorteilhaft ist es auch, daß die Vertikalhöhe des Randes 25 gleich oder kleiner als die Vertikalhöhe des Randes 26 ist.

Die obere Kante des Randes 25 und/oder des Randes 26 ist vorzugsweise gekröpft und/oder nach außen umgebogen. So wird nicht nur die Quersteifigkeit insbesondere eines Metallkragens erhöht, sondern der Rand 25 ist vorzugsweise als Abgießrand ausgebildet, so daß sich das aufgefangene Kondensat bequem abgießen läßt. Infolge der erfindungsgemäßen Anordnung und Verbindung des Haubenteils 1 mit dem Ringkragen 2 ist der Neigungswinkel der Kipplage der Abdeckhaube beim Abgießen relativ gering. Um das Abgießen weiter zu verbessern, ist zweckmäßig eine Abgießnase 24 am freien Ende des Randes 25 ausgebildet, wie dies in Fig. 2 dargestellt ist. Eine solche Abgießnase ist zweckmäßig als Bestandteil eines gekröpften Randes vorgesehen.

Wie aus Fig. 1 ersichtlich, untergreift der Stegabschnitt 322 der Halte-/Verbindungsklammer 3 den Ringkragen 2 derart, daß die erfindungsgemäße Abdeckhaube direkt nur mit dem Stegabschnitt 322 direkt auf dem Oberrand der Bratpfanne 4 aufsitzt. Die Unterfläche des Stegs 322 ist mit stufenförmigen Aus- oder Aßformungen profiliert, um einen besonders rutschfesten, gegen Verschieben und Kippen sichernden Sitz auf Bratgeräten verschiedener Standardgrößen zu erhalten.

Eine weiter vorteihafte und zweckmäßige Ausführung des Stegabschnitts besteht auch darin, daß er durch eine nach unten konvexe Wölbung 33 vorgespannt ist, wie sie in Fig. 1 gestrichelt dargestellt ist. Ein derartiger gekrümmter Federsteg dient nicht nur der Klemmaufnahme des Ringkragens 2, sondern er kann sehr vorteilhaft auch genutzt werden, um den Kragenboden gezielt etwas mehr als bei dem geraden Stegabschnitt 322 von dem Oberrand des Bratgeräts 4 zu distanzieren. Zudem ist es dabei besonders vorteilhaft, daß ein federnder Aufsitz der Abdeckhaube auf dem Bratgerätrand erreicht wird.

## Patentansprüche

1. Abdeckhaube für Brat- und Kochgerätschaften, umfassend ein Haubenteil (1), einen ringförmigen Kragen (2), der einen Kondensatauffangring bildet und in der Ringbreite quer über den Oberrand der Brat-/Kochgerätschaft (4) setzbar ist, sowie ein Haltemittel (3), wobei das Haubenteil (1) nur indirekt über das Haltemittel (3) mit dem Kragen (2) verbunden und derart gehalten ist, daß an der Haubenteil-Innenfläche (13) anfallendes Kondensat auf den Kragen (2) gelangt, **dadurch gekennzeichnet,** daß das Haltemittel (3) außen an dem Kragen (2) angeordnet ist und das Haubenteil (1) mit mindestens einem in vertikaler Richtung räumlich über dem Kragen (2) angeordneten Kalteteil (31) des Haltemittels (3) verbunden ist.

2. Abdeckhaube nach Anspruch 1, **dadurch gekennzeichnet,** daß der Kragen (2) als Tropfwanne (20) vorzugsweise mit einer umlaufenden, zum Haubeninneren hin gelegenen Auffangrinne (21) ausgebildet ist.

3. Abdeckhaube nach Anspruch 2, **dadurch gekennzeichnet,** daß die Tropfwanne (20) mit einem Abgießrand und/oder wenigestens einer Abgießnase oder -öffnung (24) zum Abgießen von aufgefangenem Kondensat versehen ist.

4. Abdeckhaube nach einem der Ansprüche 1 bis 3, **dadurch gekennzeichnet,** daß der Kragen (2) im Profilquerschnitt mit wenigstens einem im Verhältnis zur Ringbreite (B) relativ niedrigen Höhenrand (25, 26) L- oder U-förmig ist.

5. Abdeckhaube nach einem der Ansprüche 1 bis 4, **dadurch gekennzeichnet,** daß Ringkragen (2) und Haltemittel (3) lösbar miteinander verbunden sind, wobei das Haltemittel (3) den Ringkragen (2) mittels einer Halte-/Klemmaufnahme (32) wenigstens teilweise umgreift.

6. Abdeckhaube nach Anspruch 5, **dadurch gekennzeichnet,** daß die Haltemittel-Klemmaufnahme (32) die Kragenunterseite zur Bildung eines Aufsitzelements (322) untergreift, das vorzugsweise im Profilquerschnitt wellen- oder stufenförmig geformt ist.

7. Abdeckhaube nach einem der Ansprüche 1 bis 6, **dadurch gekennzeichnet,** daß das Haltemittel (3) wenigstens drei über den Haubenumfang verteilt angeordnete, in lösbarem Klemmsitz an dem Ringkragen (2) befestigte Halteklammern umfaßt.

8. Abdeckhaube nach einem der Ansprüche 1 bis 7, **dadurch gekennzeichnet,** daß das Haltemittel-Halteteil (31) als elastisch federndes, vorzugsweise S-förmiges Klemmelement ausgebildet ist, in das ein an dem Haubenteil (1) radial hervorstehendes Element (11) einklipsbar ist und vorzugsweise drei über den Haubenumfang verteilt angeordnete Klemmelemente vorgesehen sind.

9. Abdeckhaube nach einem der Ansprüche 1 bis 8, **dadurch gekennzeichnet,** daß der äußere Durchmesser (OD) am unteren Haubenteilrand (11) gleich oder kleiner als der äußere Ringkragendurchmesser (RD) ist, wobei vorzugsweise der resultierende Rand-Radialabstand (DR) 0 bis 4 mm beträgt.

10. Abdeckhaube nach einem der Ansprüche 1 bis 9, **dadurch gekennzeichnet,** daß der untere Öffnungsrand (11, 12) des Haubenteils (1) ohne oder nur mit geringem Vertikalabstand (DV) zum oberen Kragenrand (25) angeordnet ist, wobei vorzugsweise der Vertikalabstand (DV) 0 bis 5 mm beträgt und insbesondere der untere Öffnungsdurchmesser (ID) des Haubenteils (1) in der Größenordnung von 23 bis 28 cm liegt.
